# EUROPEAN PATENT SPECIFICATION

(11) **EP 1 471 017 B1**
(45) Date of publication and mention of the grant of the patent: **21.06.2006**
(21) Application number: 04007944.4
(22) Date of filing: 01.04.2004
(51) Int. Cl.: B65G 49/06

(54) **Machine for loading and unloading plate-like products accommodated in a storage unit**
Vorrichtung zum Ein- und Auslagern von plattenförmigen Gegenständen in Lagereinheiten
Dispositif de stockage et déstockage des éléments plats dans des unités de stockage

(30) Priority: 24.04.2003 IT PD20030081
(43) Date of publication of application: 27.10.2004
(73) Proprietor: Piazza, Alessandro, 36015 Schio (Prov. of Vicenza) (IT); Piazza, Marco, 36015 Schio (Prov. of Vicenza) (IT)
(72) Inventor: Piazza, Alessandro, 36015 Schio (Prov. of Vicenza) (IT); Piazza, Marco, 36015 Schio (Prov. of Vicenza) (IT)
(74) Representative: Modiano, Micaela Nadia

(56) References cited:
- US-A- 5 511 671
- US-A- 5 738 482

## Description

The present invention relates to a machine for picking up plate-like products that are accommodated substantially vertically or in an inclined configuration in a storage unit.

The invention is particularly applicable in the case of plate-like products such as large glass panes and the like accommodated in storage units that are particularly but not exclusively of the type with inclined frames and perpendicular translational motion.

Various handling machines or lines are currently known which transfer glass panes (or packs of glass panes) from a storage unit to a region that allows easy handling and vice versa.

Storage units used in the storage of glass panes usually have a plurality of frames that are all inclined in the same manner and are arranged in a storage area; for example, frames that have a perpendicular translational motion are known among these frames.

In the pick-up step, the panes must be moved from the storage units into an area that allows easy handling, which can also coincide with the pane working area.

For example, a machine for picking up and loading plate-like products is known which is arranged laterally adjacent to a storage unit with inclined frames, which comprises a carriage-like structure of the portal type that can move on horizontal guides by way of motor means and rack-and-pinion systems in a direction that is parallel to the extension of the storage unit.

A bed with rollers for supporting the plate-like products is coupled to said motorized structure.

Such bed is coupled to the motorized structure by way of means for tilting said bed from a substantially horizontal position to an inclined position.

The portal defined by the structure supports in an upper region a guiding cross-member, which is arranged at right angles to the direction of the translational motion of the motorized structure and is substantially cantilevered out with respect to said structure, so as to lie above the frames of the storage unit.

A unit for picking up the plate-like products from the storage unit is slidingly arranged on the guiding cross-member and comprises means for tilting a horizontal frame provided with suckers.

The operation of the machine is simple; the motorized structure is moved until it arrives at the inclined frame where the plate-like element to be picked up is stored.

At this point, the pick-up unit is moved until it lies with the sucker frame in front of the pane to be picked up.

The sucker frame is inclined by the amount required to make it parallel to the pane and is then made to adhere to said pane.

The pick-up unit performs a translational motion until the pane is arranged above the roller bed, which is inclined until it becomes substantially parallel to said pane.

The bed is provided with supporting rollers that are arranged at right angles to said bed and act as a vertical support for the pane when it is released by the pick-up unit.

At this point, the bed is lowered, returning the pane to the horizontal position, where it can be worked, if a machining center is associated with the bed, or can be easily handled since it rests on rollers. US 5.738.482 discloses an apparatus for gripping and transporting slabs from a storehouse which comprises a motorized carriage that slides along a guiding rail. On top of the carriage a rotation group for a gripping systemis mounted. The gripping system comprises a guiding group, which is mounted on top of the rotation group and which is arranged at a right angle to the direction of the carriage motion, a rod, which slides inside the guiding group and which carries a plurality of frames, and a plurality of suckers which are disposed on the frames. The suckers are capable of removing the slabs from a storehouse.

Although this type of machine is appreciated commercially for its excellent features of reliability and practicality in use, it has operating limitations.

The pane storage unit in fact may have, between the inclined frames, due to layout issues, elements that have a certain vertical extension, such as for example columns, machines, overhead structures, et cetera.

In these situations, therefore, the cantilevered portion of the guiding cross-member, which is arranged between such vertically extended elements, prevents the motorized structure from performing its translational motion, since it would collide against said elements.

The aim of the present invention is to provide a machine for loading and unloading plate-like products accommodated in a storage unit that can be used easily in the most disparate layouts.

Within this aim, an object of the present invention is to provide a machine for loading and unloading plate-like products accommodated in a storage unit that allows to optimize the layout of the premises in which it is placed.

Another object of the present invention is to provide a machine for loading and unloading plate-like products accommodated in a storage unit that is versatile and flexible in use.

A further object of the present invention is to provide a machine for loading and unloading plate-like products accommodated in a storage unit that allows to automate the operations for loading and unloading said plate-like products even when the storage unit is arranged in an awkward position.

A still further object of the present invention is to provide a machine for loading and unloading plate-like products accommodated in a storage unit that is independent of the structures of the premises in which it is placed.

Another object of the present invention is to provide a machine for loading and unloading plate-like products accommodated in a storage unit that can be easily combined with lines for working the plate-like products.

This aim and these and other objects that will become better apparent hereinafter are achieved by a machine for loading and unloading plate-like products accommodated in a storage unit, according to appended claim 1.

Further characteristics and advantages of the present invention will become better apparent from the following detailed description of a preferred but not exclusive embodiment thereof, illustrated by way of non-limiting example in the accompanying drawings, wherein:

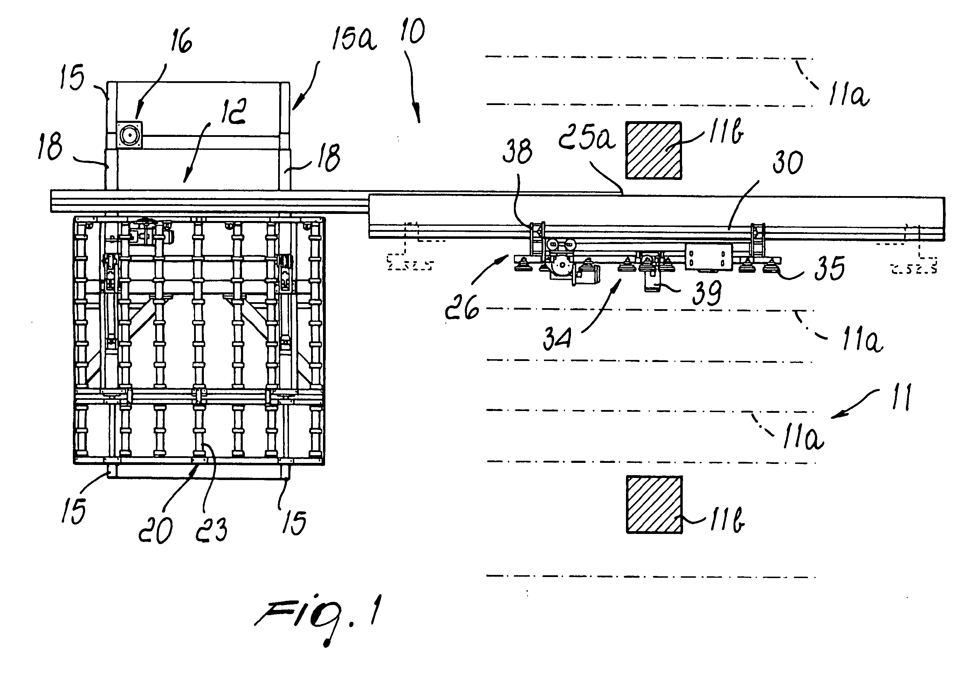

Figure 1 is a plan view of the machine according to the invention, further illustrating a storage unit for loading and unloading said plate-like products;
Figure 2 is a side view of the machine according to the invention;

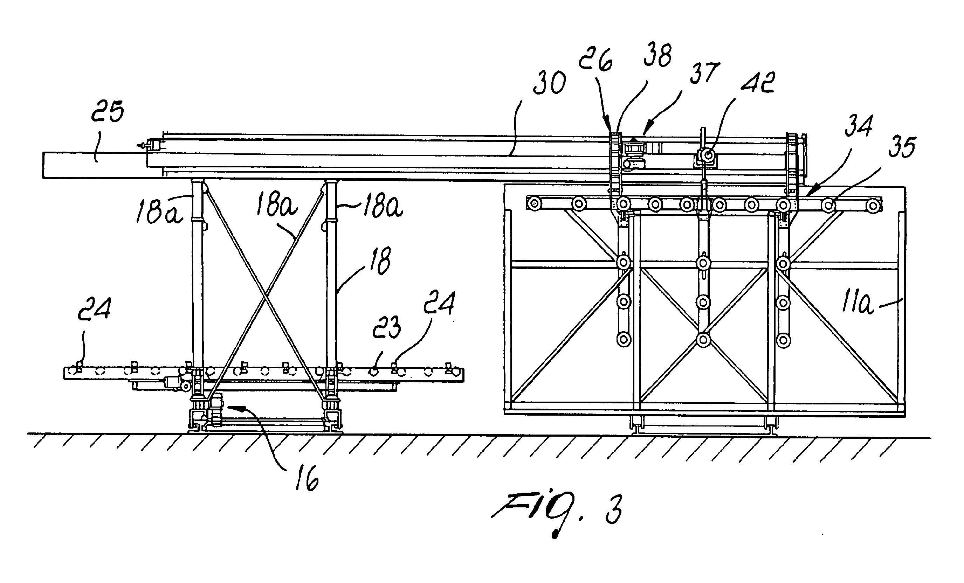

Figure 3 is a front view of the machine according to the invention;
Figure 4 is a front view of a portion of the machine according to a second embodiment of the invention with respect to the preceding figures;
Figure 5 is a front view of a detail of said guides of the machine according to the invention;
Figure 6 is a front view of a detail of said guides of the machine according to a third embodiment of the invention.

With reference to the figures, a machine for loading and unloading plate-like products accommodated in a storage unit according to the invention is generally designated by the reference numeral 10.

Such machine 10 interacts with a storage unit 11 with inclined frames, of the type that performs a perpendicular translational motion of a per se known kind, which is arranged laterally to the machine 10.

The storage unit 11 is composed of a plurality of inclined frames 11a, which are arranged in series for example between columns 11b.

The machine 10 comprises a motorized structure 12, which is constituted by a lower framework 13, which is provided with two parallel sliding blocks 14, on which wheels 14a are provided that can run along two horizontal guides 15 parallel to the direction of extension in series of the storage unit 11, and by a portal 17, which extends vertically, by means of uprights 18, from the sliding blocks 14.

In an alternative embodiment of the invention not shown in the figures, there are three uprights 18 for the portal, i.e., two lateral ones and a central one.

The motorized structure 12 can perform a translational motion on the guides 15 and its motion is controlled and actuated by a first gearmotor-pinion-rack unit 16.

The horizontal guides 15 are formed on a monolithic footing 15a that is rigidly coupled to the ground.

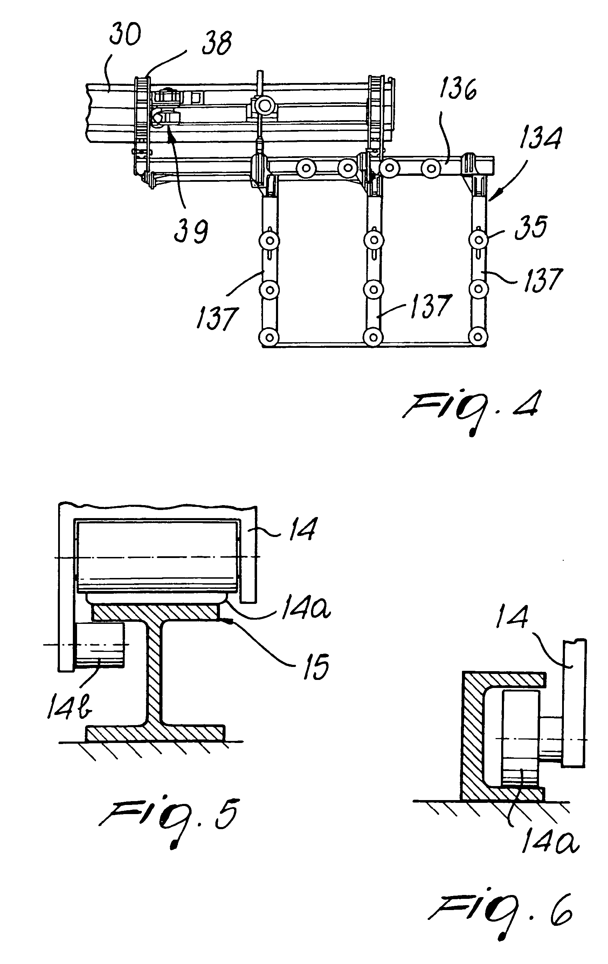

The guides 15 comprise for example longitudinal members that have a double-T transverse cross-section (see Figure 5).

The sliding blocks 14 comprise the wheels 14a, which can run on the upper portion of said longitudinal members, and further comprise anti-tip wheels 14b, which are arranged on the undercut inner side of said longitudinal members having a double-T cross-section and skim from below one of the upper wings.

A further embodiment of said guides 15 comprises for example longitudinal members that have a C-shaped transverse cross-section (see Figure 6).

In this case, the wheels 14a of the sliding blocks 14 are arranged so that they can slide within the undercut space of said longitudinal members having a C-shaped cross-section; in particular, the wheels 14a run on the lower wing and skim from below the upper wing, so as to avoid tipping.

A bed 20 for supporting the plate-like products after they are picked up from the storage unit 11 is pivoted to the motorized structure 12 proximate to an end side 19.

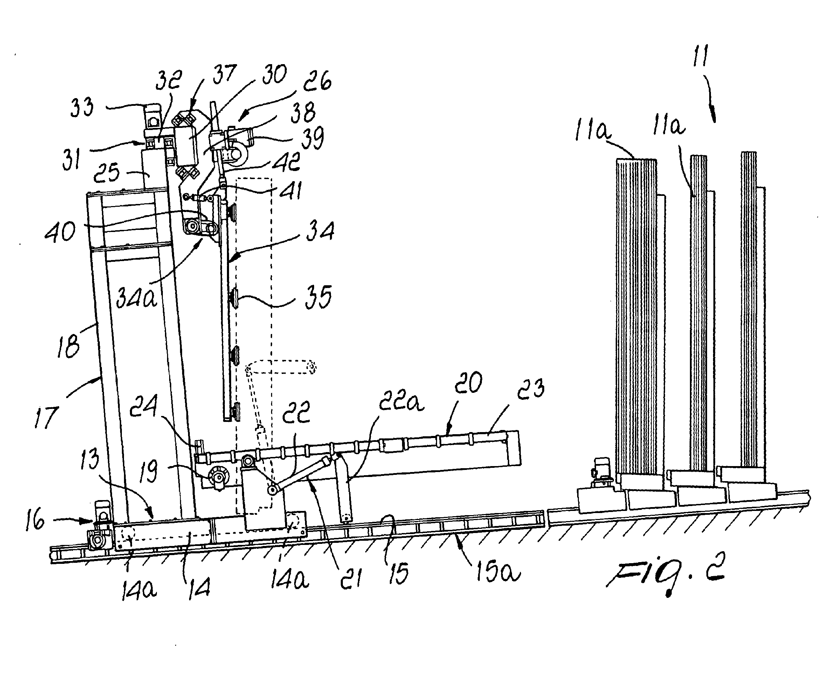

First means 21 for tilting the bed 20 from a substantially horizontal position (see Figure 2) to an inclined position (shown in dashed lines in Figure 2) are associated with the bed 20.

The first tilting means 21 are constituted for example by two pneumatic cylinders 22 that are pivoted at one end to the lower framework 13 and at the other end to said bed.

The bed 20 further has a stand 22a.

The elongation of the piston of the pneumatic cylinder allows the bed 20 to tilt upward by rotating about its own axis of pivoting to the framework 13.

The bed 20 is of the type with rollers 23 and is further provided with secondary rollers 24 that are arranged proximate to the end side 19 so that their rotation axis is perpendicular to the extension of said bed.

The portal 17, by means of the uprights 18, supports in an upper region a guiding cross-member 25 that is arranged at right angles to the direction of translational motion of the motorized structure 12.

The uprights 18 respectively have, at their upper ends, removable portions 18a for extending the height of the guiding cross-member 25 from the ground.

The uprights 18 are stiffened by means of braces 18b.

In particular, the guiding cross-member 25 cantilevers out from the portal 17 toward the storage unit 11 without however arranging the end 25a of the cantilevered part between the columns 11b.

A pick-up unit 26 for picking up the plate-like products from the storage unit 11 is arranged slidingly on the guiding cross-member 25.

Such pick-up unit 26 comprises an extension slide 30, which is arranged so that it can slide along the guiding cross-member 25 by way of first sliding means 31.

In particular, in this embodiment the extension slide 30 is arranged upward and in front of the guiding cross-member 25.

The first sliding means 31 are constituted for example by guides with rollers 32 and by a second gearmotor-pinion-rack unit 33.

The extension slide 30 is shaped like a beam and runs parallel to the guiding cross-member 25.

A horizontal frame 34 is arranged so that it can slide on the extension slide 30 and is provided with suckers 35 that are associated with a pneumatic system 36; the horizontal frame 34 is shaped like a comb with downward-pointing toothed portions, on which some of the suckers 35 are arranged.

The horizontal frame 34 is associated with second means 37 for sliding on the extension slide 30, which are constituted by a slider 38, which is slidingly coupled to the extension slide 30, and by a third gearmotor-pinion-rack unit 39, which acts between the slider 38 and the extension slide 30.

Second tilting means 34a are associated with the horizontal frame 34 in order to allow said frame to be arranged parallel to the plate-like product to be picked up from the storage unit 11.

The second tilting means 34a are constituted for example by two rockers 40, which are pivoted respectively to the frame 34 and to the slider 38, by two pneumatic cylinders 41, which are also respectively pivoted to the frame 34 and to the slider 38, and by an additional pneumatic cylinder 42, which acts vertically and is designed to provide vertical support and is pivoted to one end of the frame 34 and to the slider 38.

The extension slide 30 is arranged on the guiding cross-member 25 so that when it is arranged at the stroke limit of the cantilevered part of the guiding cross-member 25 its extension continues beyond the end 25a.

The operation of the machine is as follows.

Consider for example the step for pick-up from the storage unit.

The motorized structure 12 is moved until it arrives at the inclined frame 11a, where the pane to be picked up is stored.

In this step, the longitudinal dimension of the extension slide 30 is contained within the longitudinal dimension of the guiding cross-member 25.

At this point, the extension slide 30 is moved until it lies above the inclined frame 11a.

The frame 34 with suckers 35 is made to perform a translational motion on the extension slide 30 until it is arranged in front of the pane to be picked up.

The frame 34 is inclined by the extent required to arrange it parallel to the pane and is then made to adhere to said pane, moving the suckers 35 into contact and producing a vacuum inside them.

At this point, the various components of the pick-up unit perform a translational motion until the pane is arranged above the rollers 23 of the bed 20, which is tilted until it becomes substantially parallel to said pane.

The bed 20 is, as mentioned, provided with the supporting secondary rollers 24, which are arranged at right angles to said bed and act as a vertical support for the pane when it is released by the pick-up unit.

At this point, the bed 20 is lowered, returning the pane to the horizontal position, where it can be machined, if a machining center is associated with the bed, or handled easily, since it rests on rollers.

A second embodiment of the machine, shown in Figure 4, has a frame, now designated by the reference numeral 134, that is gooseneck-shaped.

In particular, the frame 134 has a horizontal beam 136, and three vertical beams 137 protrude from the portion of the horizontal beam 136 that is directed toward the frames 11 a so as to form substantially a region known as gooseneck region.

Such gooseneck region can cantilever out partially from the slide 30.

Suckers 135 are arranged on the beams 136 and 137.

The frame 134 is rigidly coupled to the slider, designated here by the reference numeral 138, so that when it is arranged at the stroke limit of the extension slide 30 the horizontal beam 136 cantilevers out from the extension slide 30.

In practice it has been found that the invention thus described solves the problems noted in known types of machine for picking up and loading plate-like products; in particular, the present invention provides a machine for picking up and loading plate-like products accommodated in a storage unit with inclined frames that allows to interact with storage units arranged between vertically extended elements, such as columns or the like, that are present in the work area.

It should be noted in fact that the use of the extension slide allows to arrange the pick-up unit at the storage unit without hindering the motorized structure in its translational motion parallel to said storage unit.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2003A000081 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine for loading and unloading plate-like products accommodated in a storage unit, particularly but not exclusively of the type with translational motion at right angles, comprising a motorized structure (12) that can perform a translational motion on horizontal guides (15) in a direction that is substantially parallel to the direction of extension of the storage unit (11) with which the machine (10) interacts, a guiding cross-member (25) which is formed on the upper part of said structure (12) and is arranged substantially at right angles to the direction of the translational motion of said motorized structure (12), and a unit (26) for picking up the plate-like products from the storage unit (11) which is slidingly arranged on said guiding cross-member (25), said pick-up unit (26) comprising a horizontal frame (34) with suckers (35), said machine being **characterized in that** it comprises a bed (20) for supporting the plate-like products before loading or after unloading from the storage unit (11) and which is coupled to said motorized structure (12), first means (21) for tilting said bed (20) from a substantially horizontal position to an inclined position being associated with said bed (20), and **in that** said pick-up unit (26) comprises second tilting means (34a) for said horizontal frame (34) and first means (31) for the sliding of an extension slide (30) along said guiding cross-member (25), said horizontal frame (34) being arranged so that it can slide on said extension slide (30), parallel to said cross-member (25), for association with second sliding means (37), said extension slide (30), when arranged respectively at at least one of the two stroke limits of said guiding cross-member (25), extending beyond the end (25a) of said guiding cross-member (25) related to said at least one of the two stroke limits.

2. The machine according to claim 1, **characterized in that** said motorized structure (12) comprises a lower framework (13) that is provided with wheels (14a) that are arranged so that they can run on two horizontal guides (15) formed on a monolithic footing (15a).

3. The machine according to claim 2, **characterized in that** said motorized structure (12) comprises two sliding blocks (14) on which said wheels (14a) are arranged and a portal (17) that is formed by said guiding cross-member (25) and by the corresponding supporting uprights (18).

4. The machine according to claim 3, **characterized in that** said portal (17) comprises three of said uprights (18).

5. The machine according to claims 3 or 4, **characterized in that** said uprights (18) have, at their upper ends, respectively removable portions (18a) for extending the height from the ground of said guiding cross-member (25).

6. The machine according to one or more of the preceding claims, **characterized in that** the translational motion of said motorized structure (12) is actuated by a first gearmotor-pinion-rack unit (16).

7. The machine according to one or more of the preceding claims, **characterized in that** said guides (15) comprise longitudinal members that have a double-T transverse cross-section, said wheels (14a) of said sliding blocks (14) being able to run on the upper portion of said longitudinal members, said sliding blocks further comprising anti-tip wheels (14b) that are arranged on the undercut inner side of said longitudinal members having a double-T cross-section and skim from below one of the upper wings that form said double-T cross-section.

8. The machine according to one or more of claims 1 to 6, **characterized in that** said guides (15) comprise longitudinal members that have a C-shaped transverse cross-section, said wheels (14a) of said sliding blocks being arranged so that they can slide within the undercut space of said longitudinal members having a C-shaped cross-section on the lower wing that forms said C-shaped cross-section and skim from below the upper wing.

9. The machine according to claim 8, **characterized in that** said supporting bed (20) is pivoted, proximate to one of its end sides (19), to said motorized structure (12), said first tilting means (21) associated with said bed (20) being further constituted by pneumatic cylinders (22) that act between said lower framework (13) and said bed (20), said bed (20) being of the type with rollers (23) and being further provided with secondary rollers (24) that are arranged proximate to said outer side (19) so that their rotation axis lies at right angles to the extension of said bed (20).

10. The machine according to one or more of the preceding claims, **characterized in that** said extension slide (30) is shaped like a beam and is longitudinally extended parallel to said guiding cross-member (25).

11. The machine according to one or more of the preceding claims, **characterized in that** said first means (31) for the sliding of said extension slide (30) along said guiding cross-member (25) are constituted by guides (32) and by a second gearmotor-pinion-rack unit (33).

12. The machine according to one or more of the preceding claims, **characterized in that** said second sliding means (37) with which said horizontal frame (34) is associated comprise a slider (38), which is slidingly coupled to said extension slide (30), and a third gearmotor-pinion-rack unit (39), which acts between said slider (38) and said extension slide (30).

13. The machine according to one or more of the preceding claims, **characterized in that** said second tilting means (34a) comprise two rockers (40), which are pivoted respectively to said frame (34) and to said slider (38), a pair of pneumatic cylinders (41) which also respectively act between said frame (34) and said slider (38), and an additional pneumatic cylinder (42) that acts vertically, with vertical movement and support functions, which is pivoted to one end of said frame (34) and to said slider (38).

14. The machine according to one or more of the preceding claims, **characterized in that** part of said guiding cross-member (25) cantilevers out from said portal (17) toward said storage unit (11).

15. The machine according to one or more of the preceding claims, **characterized in that** said frame is comb-shaped with tooth-like portions on which suckers (35) are provided that are directed downward during pick-up from said storage unit (11).

16. The machine according to one or more of claims 1 to 12, **characterized in that** said frame (134) is gooseneck-shaped and has a horizontal beam (136), at least two vertical beams (137) extending from the portion of said beam (136) that is directed toward said motorized structure (12), said suckers (135) being arranged on said beams (136, 137), said frame (134) being rigidly coupled to said slider element (138) so that when it is arranged at the stroke limit of said extension slide (30) said horizontal beam (136) cantilevers partially out of said extension slide (30).

17. The machine according to one or more of the preceding claims, **characterized in that** said extension slide (30) is arranged so that it can slide in front of said guiding cross-member (25) and above it.

## Patentansprüche

1. Vorrichtung zum Ein- und Ausladen plattenförmiger Gegenstände, die in einer Speichereinheit untergebracht sind, insbesondere aber nicht ausschließlich von der Art mit einer rechtwinkligen Translationsbewegung, die eine motorisierte Konstruktion (12), die eine Translationsbewegung an horizontalen Führungen (15) in eine Richtung ausführen kann, die im Wesentlichen parallel zu der Richtung der Ausdehnung der Speichereinheit (11) ist, mit der die Vorrichtung (10) zusammenwirkt, ein Führungsquerelement (25), das an dem oberen Teil der Konstruktion (12) gebildet und im Wesentlichen rechtwinklig zu der Richtung der Translationsbewegung der motorisierten Konstruktion (12) angeordnet ist, und eine Einheit (26) zum Aufnehmen der plattenförmigen Gegen-stände aus der Speichereinheit (11) aufweist, die gleitbar an dem Führungsquerelement (25) angeordnet ist, wobei die Aufnahmeeinheit (26) einen horizontalen Rahmen (34) mit Saugern (35) aufweist, **dadurch gekennzeichnet, dass** die Vorrichtung ein Auflager (20) zum Tragen der plattenförmigen Gegenstände vor dem Einladen oder nach dem Ausladen aus der Speichereinheit (11), welches mit der motorisierten Konstruktion (12) gekoppelt ist, und erste Einrichtungen (21) zum Kippen des Auflagers (20) aus einer im Wesentlichen horizontalen Position in eine geneigte Position aufweist, die mit dem Auflager (20) verbunden sind, und dass die Aufnahmeeinheit (26) zweite Kippeinrichtungen (34a) für den horizontalen Rahmen (34) und erste Einrichtungen (31) für das Gleiten einer Auszugsgleitschiene (30) entlang dem Führungsquerelement (25) aufweist, wobei der horizontale Rahmen (34) derart angeordnet ist, dass er an der Auszugsgleitschiene (30) parallel zu dem Querelement (25) zur Verbindung mit zweiten Gleitelementen (37) gleiten kann, und die Auszugsgleitschiene (30), wenn sie entsprechend zumindest an einer der zwei Anschlagsgrenzen des Führungsquerelementes (25) angeordnet ist, sich hinter das Ende (25a) des Führungsquerelementes (25) in Bezug auf die zumindest eine der beiden Anschlagsgrenzen erstreckt.

2. Vorrichtung nach Anspruch 1, **dadurch gekennzeichnet, dass** die motorisierte Konstruktion (12) ein unteres Fachwerk (13) aufweist, das mit Rädern (14a) versehen ist, die derart angeordnet sind, dass sie an zwei horizontalen Führungen (15) entlang laufen können, die an einem monolithischen Fundament (15a) gebildet sind.

3. Vorrichtung nach Anspruch 2, **dadurch gekennzeichnet, dass** die motorisierte Konstruktion (12) zwei Gleitblöcke (14), an denen die Räder (14a) angeordnet sind, und ein Portal (17) aufweist, das durch das Führungsquerelement (25) und durch entsprechende Stützpfosten (18) gebildet ist.

4. Vorrichtung nach Anspruch 3, **dadurch gekennzeichnet, dass** das Portal (17) drei Pfosten (18) aufweist.

5. Vorrichtung nach Anspruch 3 oder 4, **dadurch gekennzeichnet, dass** die Pfosten (18) an ihren oberen Enden entsprechende entfernbare Abschnitte (18a) zum Ausfahren der Höhe des Führungsquerelementes (25) von dem Boden aufweisen.

6. Vorrichtung nach einem oder mehreren der vorstehenden Ansprüche, **dadurch gekennzeichnet, dass** die Translationsbewegung der motorisierten Konstruktion (12) durch eine erste Zahnstangengetriebemotoreinheit (16) angetrieben ist.

7. Vorrichtung nach einem oder mehreren der vorstehenden Ansprüche, **dadurch gekennzeichnet, dass** die Führungen (15) längliche Elemente aufweisen, die einen Doppel-T-Querschnitt haben, die Räder (14a) der Gleitblöcke (14) in der Lage sind, an dem oberen Teil der länglichen Elemente entlang zu laufen, und die Gleitblöcke ferner Anti-Kippräder (14b) aufweisen, die an der unterschnittenen Innenseite der länglichen Elemente mit einem Doppel-T-Querschnitt angeordnet sind und unter einem der oberen Flügel entlang gleiten, die den Doppel-T-Querschnitt bilden.

8. Vorrichtung nach einem oder mehreren der Ansprüche 1 bis 6, **dadurch gekennzeichnet, dass** die Führungen (15) längliche Elemente aufweisen, die einen C-förmigen Querschnitt haben, die Räder (14a) der Gleitblöcke derart angeordnet sind, dass sie innerhalb des unterschnittenen Raumes der länglichen Elemente mit einem C-förmigen Querschnitt an dem unteren Flügel entlang gleiten können, der den C-förmigen Querschnitt bildet, und unter dem oberen Flügel entlang gleiten.

9. Vorrichtung nach Anspruch 8, **dadurch gekennzeichnet, dass** das Stütz-auflager (20) in der Nähe einer seiner Endseiten (19) an der motorisierten Struktur (12) angelenkt ist, die ersten Kippeinrichtungen (21), die mit dem Auflager (20) verbunden sind, ferner durch pneumatische Zylinder (22) gebildet sind, die zwischen dem unteren Fachwerk (13) und dem Auflager (20) wirken, das Auflager (20) von dem Typ mit Rollen (23) ist und ferner mit Sekundärrollen (24) versehen ist, die in der Nähe der Außenseite (19) angeordnet sind, so dass deren Rotationsachse rechtwinklig zu der Ausdehnung des Auflagers (20) liegt.

10. Vorrichtung nach einem oder mehreren der vorstehenden Ansprüche, **dadurch gekennzeichnet, dass** die Auszugsgleitschiene (30) balkenartig geformt ist und sich parallel zu dem Führungsquerelement (25) längs erstreckt.

11. Vorrichtung nach einem oder mehreren der vorstehenden Ansprüche, **dadurch gekennzeichnet, dass** die ersten Einrichtungen (31) zum Gleiten der Auszugsgleitschiene (30) entlang dem Führungsquerelement (25) durch Führungen (32) und durch eine zweite Zahnstangengetriebemotoreinheit (33) gebildet sind.

12. Vorrichtung nach einem oder mehreren der vorstehenden Ansprüche, **dadurch gekennzeichnet, dass** die zweiten Gleiteinrichtungen (37), mit denen der horizontale Rahmen (34) verbunden ist, einen Gleitschieber (38), der gleitbar mit der Auszugsgleitschiene (30) gekoppelt ist, und eine dritte Zahnstangengetriebemotoreinheit (39) aufweist, die zwischen dem Gleitschieber (38) und der Auszugsgleitschiene (30) wirkt.

13. Vorrichtung nach einem oder mehreren der vorstehenden Ansprüche, **dadurch gekennzeichnet, dass** die zweiten Kippeinrichtungen (34a) zwei Kipphebel (40), die an dem Rahmen (34) bzw. an dem Gleitschieber (38) angelenkt sind, ein Paar pneumatischer Zylinder (41), die ebenfalls zwischen dem Rahmen (34) bzw. dem Gleitschieber (38) wirken, und einen zusätzlichen pneumatischen Zylinder (42) aufweisen, der mit einer vertikalen Bewegung und Stützfunktionen vertikal wirkt und der an einem Ende des Rahmens (34) und an dem Gleitschieber (38) angelenkt ist.

14. Vorrichtung nach einem oder mehreren der vorstehenden Ansprüche, **dadurch gekennzeichnet, dass** ein Teil des Führungsquerelementes (25) von dem Portal (17) in Richtung der Speichereinheit (11) vorspringt.

15. Vorrichtung nach einem oder mehreren der vorstehenden Ansprüche, **dadurch gekennzeichnet, dass** der Rahmen kämmförmig mit zahnartigen Abschnitten ist, an denen Sauger (35) vorgesehen sind, die während des Aufnehmens aus der Lagereinheit (11) nach unten gerichtet sind.

16. Vorrichtung nach einem oder mehreren der Ansprüche 1 bis 12, **dadurch gekennzeichnet, dass** der Rahmen (134) schwanenhalsförmig ist und einen horizontalen Balken (136) und zumindest zwei vertikale Balken (137) aufweist, die sich von dem Abschnitt des Balkens (136) erstrecken, der zu der motorisierten Konstruktion (12) gerichtet ist, wobei die Sauger (135) an den Balken (136, 137) angeordnet sind und der Rahmen (134) fest mit dem Gleitelement (138) gekoppelt ist, so dass, wenn er an der Anschlagsgrenze der Auszugsgleitschiene (30) angeordnet ist, der horizontale Balken (136) teilweise von der Auszugsgleitschiene (30) vorspringt.

17. Vorrichtung nach einem oder mehreren der vorstehenden Ansprüche, **dadurch gekennzeichnet, dass** die Auszugsgleitschiene (30) derart angeordnet ist, dass sie vor und oberhalb des Führungsquerelementes (25) entlang gleiten kann.

## Revendications

1. Machine pour charger et décharger des éléments plats dans une unité de stockage, particulièrement mais non exclusivement du type à déplacements en translation selon des directions perpendiculaires, comprenant une structure motorisée (12) qui peut effectuer un déplacement en translation sur des guidages horizontaux (15) dans une direction qui est substantiellement parallèle à la direction d'extension de l'unité de stockage (11) avec laquelle le dispositif(10) interagit, une traverse de guidage (25) qui est formée sur la partie supérieure de ladite structure (12) et qui est orientée substantiellement à angle droit par rapport à la direction du déplacement en translation de ladite structure motorisée (12), et une unité (26) pour le ramassage des éléments plats à partir de l'unité de stockage (11) qui est adaptée en coulissement sur ladite traverse de guidage (25), ladite unité de ramassage (26) comprenant un bâti horizontal (34) avec des ventouses (35), ladite machine étant **caractérisée en ce qu'**elle comprend un support (20) pour soutenir les éléments plats avant le chargement ou après le déchargement à partir de l'unité de stockage (11) et qui est couplé à ladite structure motorisée (12), un premier moyen (21) pour incliner ledit support (20) à partir d'une position substantiellement horizontale vers une position inclinée étant associé audit support (20), et **en ce que** dans ladite unité de ramassage (26) comprend des seconds moyens d'inclinaison (34a) pour ledit bâti horizontal (34) et des premiers moyens (31) pour le coulissement d'une glissière de prolongement (30) le long de ladite traverse de guidage (25), ledit bâti horizontal (34) étant adapté afin de permettre son coulissement sur ladite glissière de prolongement (30), parallèlement à ladite traverse (25), pour être associé à des seconds moyens de coulissement (37), ladite glissière de prolongement (30), lorsqu'elle est disposée respectivement à au moins une des deux limites de course de ladite traverse de guidage (25), s'étendant au-delà de l'extrémité (25a) de ladite traverse de guidage (25) correspondant à au moins une des deux limites de course.

2. Machine selon la revendication 1, **caractérisée en ce que** ladite structure motorisée (12) comprend un châssis inférieur (13) qui est muni de roues (14a) qui sont adaptées de façon à permettre leur déplacement sur deux guidages horizontaux (15) formés sur un support monolithique (15a).

3. Machine selon la revendication 2, **caractérisée en ce que** ladite structure motorisée (12) comprend deux blocs de coulissement (14) sur lesquels lesdites roues (14a) sont adaptées et un portique (17) qui est formé par ladite traverse de guidage (25) et par les montants de supports correspondants (18).

4. Machine selon la revendication 3, **caractérisée en ce que** ledit portique (17) comprend trois desdits supports (18).

5. Machine selon les revendications 3 ou 4, **caractérisée en ce que** lesdits supports (18) ont, à leurs extrémités supérieures, respectivement des portions démontables (18a) pour augmenter la hauteur depuis le sol desdites traverses de guidage (25).

6. Machine selon l'une au moins des revendications précédentes, **caractérisée en ce que** le déplacement en translation de ladite structure motorisée (12) est actionné par une première unité moteur à engrenages-pignons-crémaillère (16).

7. Machine selon l'une au moins des revendications précédentes, **caractérisée en ce que** lesdits guidages (15) comprennent des éléments longitudinaux qui ont une section transversale en double T, lesdites roues (14a) desdits blocs (14) de coulissement étant capables de se déplacer sur la portion supérieure desdits éléments longitudinaux, lesdits blocs de coulissement comprenant en outre des roues anti-basculement (14b) qui sont adaptées sur le côté intérieur en gorge desdits éléments longitudinaux ayant une section transversale en double T et qui se rétrecissent au dessous de l'ailette supérieure pour former ladite section transversale en double T.

8. Machine selon l'une au moins des revendications de 1 à 6, **caractérisée en ce que** lesdits guidages (15) comprennent des éléments longitudinaux qui ont une section transversale en forme de C, lesdites roues (14a) desdits blocs de coulissement étant adaptées de façon à pouvoir coulisser à l'intérieur de l'espace en gorge desdits éléments longitudinaux ayant une section transversale en forme de C sur l'ailette inférieure qui forme la section transversale en forme de C et qui se rétrécit au dessous de l'ailette supérieure.

9. Machine selon la revendication 8, **caractérisée en ce que** ledit support (20) est pivoté, à proximité d'une de ses extrémités (19), vers ladite structure motorisée (12), ledit premier moyen d'inclinaison (21) associé audit support (20) étant en outre constitué de cylindres pneumatiques (22) qui agissent entre ledit châssis inférieur (13) et ledit support (20), ledit support (20) étant du type avec roulettes (23) et étant en outre muni de roulettes secondaires (24) qui sont disposées à proximité dudit côté extérieur (19) de façon à ce que leur axe de rotation soit orienté à angle droit par rapport à l'allongement dudit support (20).

10. Machine selon l'une au moins des revendications précédentes, **caractérisée en ce que** ladite glissière de prolongement (30) est conformée telle une poutre et est prolongée longitudinalement parallèlement à ladite traverse de guidage (25).

11. Machine selon l'une au moins des revendications précédentes, **caractérisée en ce que** lesdits premiers moyens (31) pour le coulissement de ladite glissière de prolongement (30) le long de ladite traverse de guidage (25) sont constitués par des guidages (32) et par une seconde unité moteur à engrenages-pignons-crémaillère (33).

12. Machine selon l'une au moins des revendications précédentes, **caractérisée en ce que** lesdits seconds moyens de coulissement (37) par rapport auxquels est adapté ledit bâti horizontal (34) comprennent un coulisseau (38), qui est couplé en coulissement à ladite glissière de prolongement (30), et une troisième unité moteur à engrenages-pignons-crémaillère (39), qui agit entre ledit coulisseau (38) et ladite glissière de prolongement (30).

13. Machine selon l'une au moins des revendications précédentes, **caractérisée en ce que** lesdits seconds moyens d'inclinaison (34a) comprennent deux basculeurs (40), qui sont articulés respectivement sur ledit bâti (34) et sur ledit coulisseau (38), une paire de cylindres pneumatiques (41) qui agissent également respectivement entre ledit bâti (34) et ledit coulisseau (38), et un cylindre pneumatique additionnel (42) qui agit verticalement , avec un déplacement vertical et des fonctions de support, qui est articulé sur une extrémité dudit bâti (34) et sur ledit coulisseau (38).

14. Machine selon l'une au moins des revendications précédentes, **caractérisée en ce qu'**une partie de ladite traverse de guidage (25) s'éloigne dudit portail (17) vers l'unité de stockage (11).

15. Machine selon l'une au moins des revendications précédentes, **caractérisée en ce que** ledit bâti est en forme de peigne avec des portions dentées sur lesquelles sont prévus des ventouses (35) qui sont dirigées vers le bas pendant le ramassage depuis ladite unité de stockage (11).

16. Machine selon l'une au moins des revendications 1 à 12, **caractérisée en ce que** ledit bâti (134) est en forme de col de cygne et a une poutre horizontale (136), au moins deux poutres verticales (137) s'étendant à partir de la portion de ladite poutre (136) qui est dirigée en direction de ladite structure motorisée (12), lesdites ventouses (135) étant adaptées sur lesdites poutres (136, 137), ledit bâti (134) étant couplé de façon rigide avec ledit élément de coulissement (138) de façon que, lorsqu'elle est disposée à la limite de la course de ladite glissière de prolongement (30), ladite poutre horizontale (136) se lève partiellement vers l'extérieur de ladite glissière de prolongement (30).

17. Machine selon l'une au moins des revendications précédentes, **caractérisée en ce que** ladite glissière de prolongement (30) est adaptée de sorte qu'elle puisse coulisser au devant de ladite traverse de guidage (25) et au dessus de celle-ci.
